# EUROPÄISCHE PATENTSCHRIFT

(11) **EP 2 126 857 B1**
(45) Veröffentlichungstag und Bekanntmachung des Hinweises auf die Patenterteilung: **14.05.2014**
(21) Anmeldenummer: 08709077.5
(22) Anmeldetag: 18.02.2008
(51) Int. Cl.: G07F 7/10, H04L 9/32, G07C 9/00, G06Q 20/32

(54) **DOKUMENT, LESEGERÄT FÜR EIN DOKUMENT, VERFAHREN ZUR ZUGRIFFSKONTROLLE UND COMPUTERPROGRAMMPRODUKT**
DOCUMENT, READING DEVICE FOR A DOCUMENT, METHOD FOR ACCESS CONTROL AND COMPUTER PROGRAM PRODUCT
DOCUMENT, LECTEUR DE DOCUMENT, PROCÉDÉ DE CONTRÔLE D'ACCÈS ET PRODUIT PROGRAMME D'ORDINATEUR

(30) Priorität: 22.02.2007 DE 102007009257
(43) Veröffentlichungstag der Anmeldung: 02.12.2009
(73) Patentinhaber: Bundesdruckerei GmbH, 10958 Berlin (DE)
(72) Erfinder: MUTH, Oliver, 12277 Berlin (DE); NGUYEN, Kim, 10437 Berlin (DE); FISCHER, Jörg, 13053 Berlin (DE); PAESCHKE, Manfred, 16348 Wandlitz (DE)
(74) Vertreter: Richardt Patentanwälte PartG mbB
(86) Internationale Anmeldenummer: PCT/EP2008/051940
(87) Internationale Veröffentlichungsnummer: WO 2008/101899

(56) Entgegenhaltungen:
- WO-A-99/13441
- WO-A-2006/128829
- KINNEGING T A F: "Machine Readable Travel Documents Technical Report PKI for Machine Re" INTERNET CITATION, [Online] 1. November 2004 (2004-11-01), XP002396748 Gefunden im Internet: URL:http://www.icao.int/mrtd/download/docu ments/TR-PKI%20mrtds%20ICC%20re ad-only%20access%20v1_1.pdf#search=%22PKI% 20FOR%20MACHINE%20READABLE% 20TRAVEL%20DOCUMENTS%20OFFERING%20ICC%20RE AD-ONLY%20ACCESS%22> [gefunden am 2006-08-29] in der Anmeldung erwähnt
- 'Nanotechnologie', [Online] Januar 2007, Bundesamt für Sicherheit in der Informationstechnik Gefunden im Internet: <URL:https://www.bsi.bund.de/SharedDocs/Dow nloads/DE/BSI/Publikationen/Studien/Nanotec hnologie/Nanotechnologie_pdf.pdf> [gefunden am 2012-03-12]

## Beschreibung

Die Erfindung betrifft ein Dokument, insbesondere ein Wert- oder Sicherheitsdokument, ein Lesegerät für ein solches Dokument, ein Verfahren zur Zugriffskontrolle auf in einem elektronischen Speicher eines Dokuments gespeicherte Daten und ein entsprechendes Computerprogrammprodukt.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als so genannte Smart Card, in kontaktbehafteter und/oder kontaktloser Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen. RFIDs können auf Siliziumbasis oder als organische ("organic"), insbesondere polymerelektronische Schaltungen, realisiert werden. Im letzten Fall spricht man auch von O-RFIDs (vgl. hierzu DE 02 079 791 T1).

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Banknoten und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Chipkarten-Kommunikationsprotokolle und -verfahren für kontaktlose Karten sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet.

Schutzmechanismen zum Schutz gegen unbefugtes Auslesen der Daten aus einem solchen Dokument werden auch als "Basic Access Control" (BAC) bezeichnet, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO) (http://www.icao.int/mrtd/download/documents/TR-PKI%20mrtds%20ICC%20read-only%20access%20v1 1.pdf). Hierzu werden aus einer optisch lesbaren Zone des Dokuments, der sog. Maschine Readable Zone (MRZ), Daten von dem Lesegerät erfasst, mit Hilfe derer das Lesegerät einen Schlüssel generiert. Dieser Schlüssel dient zur Authentifizierung des Lesegeräts gegenüber dem RFID Chip des Dokuments. Ein Nachteil ist hierbei, dass nur relativ wenige Daten aus der MRZ ausgelesen werden können, so dass der daraus generierte Schlüssel relativ kurz ist.

Aus dem Stand der Technik sind auch Verfahren für einen erweiterten Zugriffsschutz, d.h. eine so genannte Extended Access Control (EAC) bekannt. Dabei erfolgt eine gegenseitige Authentifizierung des Lesegeräts und des RFID-Chips des Dokuments unter Verwendung asymmetrischer Kryptographieverfahren. Nachteilig sind hierbei die Komplexität solcher Verfahren und die Notwendigkeit der Schlüsselverwaltung.

Aus der WO 2006/128829 A1 ist ein elektronischen Reisepass bekannt geworden, der solche BAC- und EAC-Verfahren implementiert. In der Patentanmeldung DE 10 2006 027 253 derselben Anmelderin ist ein entsprechendes Lesegerät mit verbesserter Schlüsselverwaltung der asymmetrischen Schlüsselpaare offenbart.

In der Patentanmeldung DE 10 2005 052 071 derselben Anmelderin ist ferner ein Dokument mit vorgegebener Gültigkeit offenbart. Das Dokument hat einen integrierten RFID-Transponder der aufgrund eines allmählich ablaufenden physikalischen und/oder chemischen Prozesses in etwa zum Ende der Gültigkeit funktionsuntüchtig wird. Dies hat den Vorteil, dass das Dokument nach Ablauf seiner Gültigkeit nicht entwertet zu werden braucht, sondern ohne weiteren Eingriff seine Funktionsfähigkeit verliert.

Der Erfindung liegt demgegenüber die Aufgabe zugrunde ein weiteres Dokument mit einem integrierten elektronischen Schaltkreis, ein Lesegerät für ein solches Dokument, ein Verfahren zur Zugriffskontrolle für den Zugriff auf in dem elektronischen Speicher des Dokuments gespeicherte vertrauenswürdige Daten und ein entsprechendes Computerprogrammprodukt zu schaffen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach einer Ausführungsform der Erfindung wird ein Dokument mit einem integrierten elektronischen Schaltkreis zur Speicherung von schutzbedürftigen Daten geschaffen. Der Zugriff auf die schutzbedürftigen Daten erfolgt über eine Funkschnittstelle des Dokuments, sofern zuvor ein kryptographisches Protokoll erfolgreich ausgeführt worden ist. Der integrierte elektronische Schaltkreis ist vorzugsweise auf Siliziumbasis ausgeführt, insbesondere als Silizium-basierter RFID-Chip.

Neben dem integrierten elektronischen Schaltkreis beinhaltet das Dokument eine weitere über Funk auslesbare Informationsquelle mit ersten Daten. Bei dieser Informationsquelle kann es sich um einen weiteren integrierten elektronischen Schaltkreis handeln, wie zum Beispiel einen weiteren RFID-Chip. Ferner hat das Dokument eine optisch lesbare Zone, insbesondere eine so genannte MRC, die zweite Daten beinhaltet. Um auf die schutzbedürftigen Daten, die in dem integrierten elektronischen Schaltkreis gespeichert sind, zugreifen zu können, müssen zunächst die ersten und zweiten Daten aus der Informationsquelle bzw. der optisch lesbaren Zone ausgelesen werden, um daraus einen kryptographischen Schlüssel zu generieren, der für die Ausführung des kryptographischen Protokolls benötigt wird. Beispielsweise werden die ersten und zweiten Daten von einem Lesegerät des Dokuments kombiniert, indem diese z.B. aneinander gehängt, verwoben ("interleaved") oder einer anderen Operation unterzogen werden. Die miteinander kombinierten ersten und zweiten Daten können dann als so genannter Seed Value oder Key Seed für einen Algorithmus verwendet werden, mit Hilfe dessen das Lesegerät den kryptographischen Schlüssel generieren kann. Für die Generierung des kryptographischen Schlüssels aus dem seed value können an sich für den Bereich der Basic Access Control bekannte Algorithmen verwendet werden.

Alternativ kann das Lesegerät so ausgebildet sein, dass es lediglich zur Erfassung der ersten und zweiten Daten von dem Dokument dient. Die ersten und zweiten Daten werden nach der Erfassung von dem Lesegerät an den integrierten elektronischen Schaltkreis des Dokuments übertragen, so dass der integrierte elektronische Schaltkreis einen kryptographischen Schlüssel für die Durchführung des kryptographischen Protokolls generieren kann.

Besonders vorteilhaft ist hierbei, dass die aus der optisch lesbaren Zone optisch erfassten zweiten Daten um die über Funk von der Informationsquelle ausgelesenen ersten Daten ergänzt werden. Aufgrund des dadurch erhaltenen größeren Datenvolumens resultiert ein entsprechend längerer kryptographischer Schlüssel und damit eine erhöhte Sicherheit gegen Manipulationsversuche.

Wenn also beispielsweise die aus der optisch lesbaren Zone erfassten zweiten Daten einen Umfang von x Bit haben und die ersten Daten, die von der Informationsquelle über Funk erfasst werden, einen Umfang von y Bit haben, so kann man durch Kombination der ersten und zweiten Daten einen Seed Value von x + y Bit erhalten.

Gemäß einer Ausführungsform der Erfindung ist das kryptographische Protokoll so ausgebildet, dass lediglich eine Überprüfung der Korrektheit des Schlüssels erfolgt. Das Lesegerät sendet also den aus den ersten und zweiten Daten gewonnenen kryptographischen Schlüssel an den integrierten elektronischen Schaltkreis des Dokuments. In dem integrierten elektronischen Schaltkreis des Dokuments ist der korrekte Schlüssel als Referenz gespeichert oder kann von dem integrierten elektronischen Schaltkreis aus dem dort gespeicherten Seed Value erzeugt werden. Wenn der von dem integrierten elektronischen Schaltkreis empfangene Schlüssel mit dem dort abgespeicherten oder generierten Schlüssel übereinstimmt, so wird dem Lesegerät Zugriff auf die schutzbedürftigen Daten gewährt.

Nach einer Ausführungsform der Erfindung erfolgt die Kommunikation zwischen dem Lesegerät und dem Dokument, d.h. insbesondere mit dessen integrierten elektronischen Schaltkreis, mittels eines Secure Messaging-Verfahrens. Aus einem durch Kombination der ersten und zweiten Daten gewonnenen Seed Value kann ein kryptographischer Schlüssel für die Durchführung eines solchen Secure Messaging-Verfahrens gewonnen werden. Hierfür kann derselbe Seed Value oder ein anderer Seed Value, der durch eine andere Kombination der ersten und zweiten Daten gewonnen wird, verwendet werden und/oder derselbe Algorithmus, der zur Erzeugung des kryptographischen Schlüssels verwendet wird oder ein anderer Algorithmus.

Nach einer Ausführungsform der Erfindung beinhalten die schutzbedürftigen Daten biometrische Daten, wie zum Beispiel Fingerabdruckdaten und/oder Iris-Scann-Daten. Solche Daten müssen vor Zugriffen durch hierzu nicht autorisierte Dritte geschützt werden, um Missbrauch zu vermeiden.

Nach einer Ausführungsform der Erfindung ist die Informationsquelle des Dokuments als organische Schaltung, insbesondere als so genannte polymerelektronische Schaltung, ausgebildet. Hierbei ist besonders vorteilhaft, dass sich eine solche Schaltung ganz oder teilweise drucktechnisch realisieren lässt. Durch einen Aufdruck zumindest von Teilen der Schaltung ist eine besonders innige Verbindung der Informationsquelle mit dem Dokument gegeben, was einen besonderen Schutz vor Manipulationen bietet. Insbesondere kann die Informationsquelle als so genannte O-RFID ausgebildet sein.

Nach einer Ausführungsform der Erfindung sind der integrierte elektronische Schaltkreis und die Informationsquelle des Dokuments über dieselbe Antenne ansprechbar. Beispielsweise wird sowohl zur Kommunikation mit dem integrierten elektronischen Schaltkreis als auch zur Kommunikation mit der Informationsquelle im Wesentlichen dieselbe Funkfrequenz verwendet.

Nach einer Ausführungsform der Erfindung hat das Dokument für den integrierten elektronischen Schaltkreis und die Informationsquelle jeweils eine separate Antenne. Beispielsweise sind die Antennen auf oder in verschiedenen Schichten des Dokuments realisiert, wie zum Beispiel aufgedruckt.

Nach einer Ausführungsform der Erfindung beinhaltet das Dokument einen Hybridchip, der den integrierten elektronischen Schaltkreis und die Informationsquelle beinhaltet. Der Hybridchip beinhaltet neben üblichen siliziumbasierten Halbleiterkomponenten eine oder mehrere organische Komponenten, wie zum Beispiel polymerelektronische Transistoren.

Nach einer Ausführungsform der Erfindung beinhaltet das Dokument einen Dual-Interface-Chip, der den integrierten elektronischen Schaltkreis und die Informationsquelle beinhaltet. Beispielsweise ist der integrierte elektronische Schaltkreis als Primärchip ausgebildet und die Informationsquelle als Sekundärchip. Die Kommunikation mit dem Sekundärchip verläuft also über den Primärchip. Nur der Primärchip ist mit einer Antenne verbunden.

Nach einer Ausführungsform der Erfindung hat das Dokument eine vorgegebene Gültigkeit, wie zum Beispiel eine Gültigkeitsdauer oder eine vorgegebene maximale Anzahl von Zugriffsversuchen auf die schutzbedürftigen Daten. Die Informationsquelle ist so ausgebildet, dass diese in etwa mit Ablauf der Gültigkeit funktionsunfähig wird. Vorzugsweise beinhaltet die Informationsquelle hierzu zumindest eine organische Komponente, deren Stabilität und Lebensdauer so ausgelegt ist, dass sie mit Erreichung der vorgegebenen Gültigkeit funktionsunfähig wird, was dann zur Funktionsunfähigkeit der Informationsquelle führt. Die Funktionsunfähigkeit der Informationsquelle führt dazu, dass das Dokument nicht mehr benutzt werden kann, da ja die ersten Daten nicht mehr ausgelesen werden können, und damit ein Zugriff auf die schutzbedürftigen Daten des integrierten elektronischen Schaltkreises unmöglich wird.

Nach einer Ausführungsform der Erfindung handelt es sich bei dem Dokument um ein Wert- oder Sicherheitsdokument, insbesondere ein Ausweis- oder Reisedokument, beispielsweise einen Reisepass, Personalausweis, Visum, Führerschein, Berechtigungsnachweis, Zahlungsmittel oder dergleichen.

Nach einer Ausführungsform der Erfindung ist das Dokument Kunststoff- und/oder Papier-basiert ausgeführt. Vorzugsweise hat das Dokument einen mehrschichtigen Aufbau, wobei der integrierte elektronische Schaltkreis und die Informationsquelle sowie die zumindest eine Antenne auf oder in derselben oder verschiedenen Schichten des Dokuments angeordnet sind.

Nach einer Ausführungsform der Erfindung ist das Dokument als Chipkarte ausgebildet.

In einem weiteren Aspekt betrifft die Erfindung ein Lesegerät für ein Dokument mit Mitteln zur optischen Erfassung von ersten Daten aus einer optisch lesbaren Zone des Dokuments, Mitteln zur Erfassung von zweiten Daten aus einer über Funk auslesbaren Informationsquelle des Dokuments, Mitteln zur Generierung eines kryptographischen Schlüssels aus den ersten und zweiten Daten, Mitteln zur Durchführung eines kryptographischen Protokolls mit Hilfe des Schlüssels, um auf in dem Dokument elektronisch gespeicherte Daten nach erfolgreicher Durchführung des kryptographischen Protokolls über eine Funkschnittstelle Zugriff zu erhalten.

Das erfindungsgemäße Lesegerät kann beispielsweise für Zugangskontrollen, wie zum Beispiel Grenzkontrollen, oder Zugangskontrollen zu bestimmten sensitiven Bereichen, beispielsweise in einem Industrieunternehmen eingesetzt werden.

Nach einer Ausführungsform der Erfindung hat das Lesegerät eine einzige Antenne zur Kommunikation sowohl mit der Informationsquelle als auch mit dem integrierten elektronischen Schaltkreis des Dokuments oder jeweils eine separate Antenne.

Nach einer Ausführungsform der Erfindung hat das Lesegerät verschiedene Firmware-Komponenten mit Programminstruktionen für die Kommunikation mit der Informationsquelle und dem integrierten elektronischen Schaltkreis. Dies ist insbesondere dann vorteilhaft, wenn es sich bei dem integrierten elektronischen Schaltkreis um einen RFID auf Siliziumbasis und bei der Informationsquelle um eine O-RFID handelt, da die O-RFID ein wesentlich langsameres Ansprechverhalten, geringere Datenraten, etc. als eine Silizium-basierte RFID aufweist. Dementsprechend erfolgt die Ansteuerung der Funkschnittstelle des Lesegeräts auf unterschiedliche Art und Weise, je nach dem ob mit dem RFID oder dem O-RFID kommuniziert werden soll.

In einem weiteren Aspekt betrifft die Erfindung ein Verfahren zur Zugriffskontrolle auf in einem elektronischen Speicher eines Dokuments gespeicherte Daten, mit folgenden Schritten: Optische Erfassung von ersten Daten aus einer optisch lesbaren Zone des Dokuments, Funkerfassung von zweiten Daten aus einer über Funk auslesbaren Informationsquelle des Dokuments, Generierung eines kryptographischen Schlüssels aus den ersten und zweiten Daten, Durchführung eines kryptographischen Protokolls mit Hilfe des Schlüssels, um nach erfolgreicher Durchführung des kryptographischen Protokolls Zugriff auf die vertrauenswürdigen Daten zu erhalten.

In einem weiteren Aspekt betrifft die Erfindung ein Computerprogrammprodukt zur Durchführung eines solchen Verfahrens.

Die Erfindung ist besonders vorteilhaft, da sie es ermöglicht, ein Basic Access Control-Verfahren mit einer erhöhten Sicherheit zu schaffen. Aufgrund der erhöhten Sicherheit des Basic Access Control-Verfahrens kann je nach Anwendung auf ein Extended Access Control-Verfahren verzichtet werden.

Im Weiteren werden Ausführungsformen der Erfindung mit Bezugnahme auf die Zeichnungen näher erläutert. Es zeigen:
- Figur 1: ein Blockdiagramm erster Ausführungsformen eines erfindungsgemäßen Dokuments und eines erfindungsgemäßen Lesegeräts,
- Figur 2: ein Flussdiagramm einer Ausführungsform eines erfindungsgemäßen Verfahrens,
- Figur 3: den Schichtaufbau einer Ausführungsform eines erfindungsgemäßen Dokuments,
- Figur 4: den Schichtaufbau einer weiteren Ausführungsform eines erfindungsgemäßen Dokuments,
- Figur 5: den Schichtaufbau einer weiteren Ausführungsform eines erfindungsgemäßen Dokuments,
- Figur 6: ein Blockdiagramm weiterer Ausführungsformen eines erfindungsgemäßen Dokuments und eines erfindungsgemäßen Lesegeräts.

Elemente der nachfolgenden Figuren, die einander entsprechen, sind jeweils mit denselben Bezugszeichen gekennzeichnet.

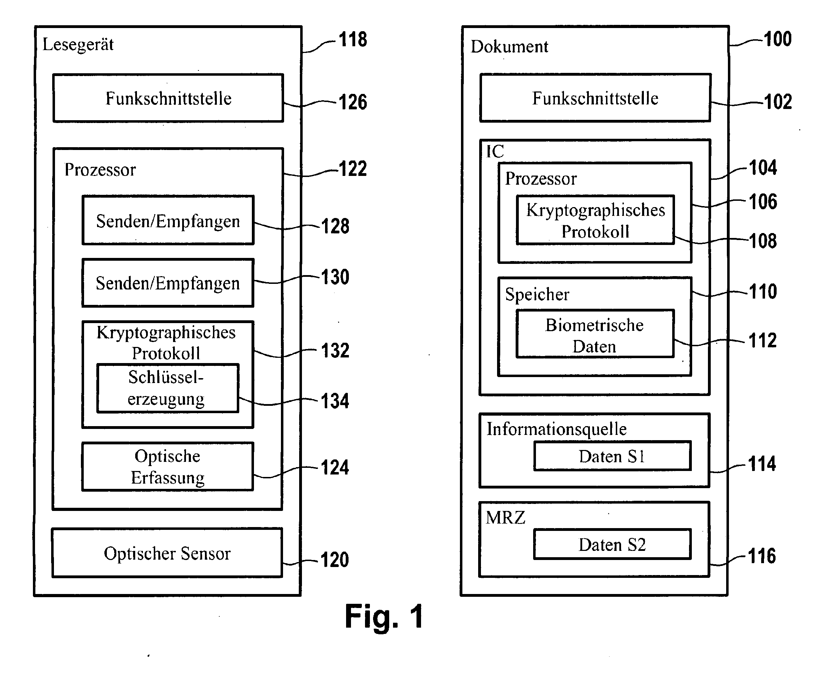

Die Figur 1 zeigt eine Ausführungsform eines erfindungsgemäßen Dokuments 100. Das Dokument 100 hat zumindest eine Funkschnittstelle 102, die insbesondere als RFID-Schnittstelle ausgebildet sein kann.

Das Dokument 100 hat zumindest einen integrierten elektronischen Schaltkreis 104. Vorzugsweise ist der integrierte elektronische Schaltkreis 104 als Halbleiterchip realisiert, vorzugsweise mit Hilfe einer üblichen Halbleitertechnologie, wie zum Beispiel Silizium-basiert. Insbesondere kann der integrierte elektronische Schaltkreis 104 als RFID-Chip ausgebildet sein, der ganz oder teilweise auch die Funkschnittstelle 102 mit beinhalten kann.

Der integrierte elektronische Schaltkreis 104 beinhaltet einen Prozessor 106 zur Durchführung von Programminstruktionen 108. Durch Ausführung der Programminstruktionen 108 werden die das Dokument 100 betreffenden Schritte eines kryptographischen Protokolls durchgeführt. Das kryptographische Protokoll kann zur Überprüfung eines über die Funkschnittstelle 102 empfangenen kryptographischen Schlüssels durch das Dokument 100 dienen, um gegebenenfalls Zugriff auf die in einem elektronischen Speicher 110 des integrierten elektronischen Schaltkreises 100 gespeicherten Daten 112 zu gewähren.

Bei den Daten 112 handelt es sich um schutzbedürftige Daten, die nicht unbemerkt oder durch unbefugte Dritte über die Funkschnittstelle 102 des Dokuments 100 ausgelesen werden dürfen. Beispielsweise handelt es sich bei den Daten 112 um personenbezogene Daten, insbesondere biometrische Daten, wie zum Beispiel Fingerabdruckdaten und/oder Iris-Scann-Daten des Trägers des Dokuments 100.

Das Dokument 100 beinhaltet eine Informationsquelle 114 zur Lieferung von Daten S1, die beispielsweise in der Informationsquelle 114 gespeichert sind oder von dieser auf eine entsprechende Anfrage hin generiert werden können. Die Informationsquelle 114 kann als Teil des den integrierten elektronischen Schaltkreis 104 beinhaltenden RFID-Chips realisiert sein oder als von dem integrierten elektronischen Schaltkreis 104 separat ausgebildete Komponente.

Beispielsweise kann die Informationsquelle 114 über dieselbe Funkschnittstelle 102 wie der integrierte elektronische Schaltkreis 104 angesprochen werden, um die Daten S1 auszulesen. Alternativ kann das Dokument 100 über eine weitere in der Figur 1 nicht gezeigte Funkschnittstelle verfügen, die zum Auslesen der Daten S1 aus der Informationsquelle 114 dient. Insbesondere kann das Dokument 100 einen weiteren RFID-Chip mit der Informationsquelle 114 beinhalten.

Die Informationsquelle 114 kann ganz oder teilweise als organische Schaltung ausgebildet sein, insbesondere als polymerelektronische Schaltung. Beispielsweise beinhaltet die Informationsquelle 114 ein oder mehrere organische Schaltungskomponenten, wie zum Beispiel organische Transistoren und/oder Leiterbahnen. Insbesondere kann die Informationsquelle 114 ganz oder teilweise drucktechnisch aufgebracht sein, um so eine besonders innige Verbindung mit dem Dokument 100 herzustellen. Insbesondere kann die Informationsquelle 114 als O-RFID ausgebildet sein.

Das Dokument 100 hat ferner eine optisch lesbare Zone 116, d.h. eine so genannte machine readable zone (MRZ). Die Zone 116 zeigt Daten S2, die beispielsweise im Klartext oder in codierter Form, wie zum Beispiel als Barcode, visuell sichtbar auf dem Dokument 100 aufgedruckt sind oder von einer in dem Dokument 100 integrierten Anzeigevorrichtung angezeigt werden.

Zum Zugriff auf die Daten 112 über die Funkschnittstelle 102 ist es erforderlich, dass von einem externen Lesegerät 118 die Daten S1 aus der Informationsquelle 114 und die Daten S2 aus der Zone 116 ausgelesen werden. Die Daten S1 und S2 werden dann in einer vordefinierten Art und Weise miteinander kombiniert, beispielsweise indem die Daten S1 und S2 aneinander gehängt werden. Auf diese Art und Weise erhält das Lesegerät 118 einen so genannten Seed Value S, der auch als Key Seed bezeichnet wird.

Aus dem Seed Value S kann ein kryptographischer Schlüssel mit Hilfe eines vorgegebenen Algorithmus generiert werden. Als notwendige Voraussetzung für einen externen Zugriff auf die Daten 112 muss das Dokument 100 über seine Funkschnittstelle 102 diesen Schlüssel empfangen, der von dem kryptographischen Protokoll durch Ausführung der Programminstruktionen 108 überprüft wird.

Hierzu ist beispielsweise der zutreffende Schlüssel als Referenzwert in dem integrierten elektronischen Schaltkreis 104, insbesondere in dem elektronischen Speicher 110 oder als Teil der Programminstruktionen 108 gespeichert, oder die Programminstruktionen 108 sind dazu ausgebildet, den zutreffenden Schlüssel zur Überprüfung des über die Funkschnittstelle 102 empfangenen Schlüssels zu generieren.

Wenn der über die Funkschnittstelle 102 empfangene Schlüssel mit dem Referenzwert des Schlüssels übereinstimmt, kann der Zugriff auf die Daten 112 gestartet werden, sodass die angeforderten Daten 112 über die Funkschnittstelle 102 an das Lesegerät 118 ausgegeben werden können. Es kann aber auch erforderlich sein, dass nach erfolgreicher Überprüfung des über die Funkschnittstelle 102 empfangenen Schlüssels weitere kryptographische Prüfungen stattfinden müssen, bevor Zugriff auf die Daten 112 gewährt werden kann, wie zum Beispiel zur gegenseitigen Authentifizierung des Lesegeräts 118 und des Dokuments 100 im Sinne einer Extended Access Control.

Das Lesegerät 118 hat einen optischen Sensor 120, wie zum Beispiel einen CCD-Sensor oder einen optischen Scanner. Mit Hilfe des Sensors 120 kann das Lesegerät 118 die im Bereich der Zone 116 sichtbaren Daten S2 optisch erfassen. Hierzu hat das Lesegerät 118 zumindest einen Prozessor 122 zur Ausführung von Programminstruktionen 124 für die Auswertung der von dem Sensor 120 gelieferten Signale.

Das Lesegerät 118 hat ferner zumindest eine Funkschnittstelle 126, die beispielsweise als RFID-Schnittstelle ausgebildet sein kann. Die zumindest eine Funkschnittstelle 126 dient zum Aufbau von drahtlosen Kommunikationsverbindungen mit der zumindest einen Funkschnittstelle 102 des Dokuments 100, um den integrierten elektronischen Schaltkreis 104 und die Informationsquelle 114 anzusprechen.

In einer Ausführungsform hat die Funkschnittstelle 126 eine einzige Antenne, um sowohl mit dem integrierten elektronischen Schaltkreis 104 und der Informationsquelle 114 auf im Wesentlichen derselben Frequenz zu kommunizieren. Da jedoch das Ansprechverhalten des vorzugsweise Silizum-basierten integrierten elektronischen Schaltkreises 104 und der vorzugsweise auf organischen Komponenten basierenden Informationsquelle 114 unterschiedlich ist, kann der Prozessor zur Ausführung jeweils verschiedener Programminstruktionen 128 bzw. 130 ausgebildet sein. Beispielsweise werden zum Lesen der Daten S1 aus der Informationsquelle 114 zunächst die Programminstruktionen 130 von dem Prozessor 122 ausgeführt, um die Funkschnittstelle 126 entsprechend anzusteuern. Zum nachfolgenden Ansprechen des integrierten elektronischen Schaltkreises 104 über die Funkschnittstelle 126 werden danach die Programminstruktionen 128 ausgeführt.

Der Prozessor 122 des Lesegeräts 118 dient ferner zur Ausführung von Programminstruktionen 132 zur Durchführung der das Lesegerät 118 betreffenden Schritte des vorgegebenen kryptographischen Protokolls. Die Programminstruktionen 132 können Programminstruktionen 134 zur Erzeugung des Schlüssels aus dem Seed Value S beinhalten.

Die Programminstruktionen 132 können auch Teil der Programminstruktionen 108 sein. In diesem Fall werden die Daten S1 und S2 von dem Lesegerät 118 and das Dokument 100 übertragen, so dass durch das Dokument 100 der Schlüssel daraus generiert wird.

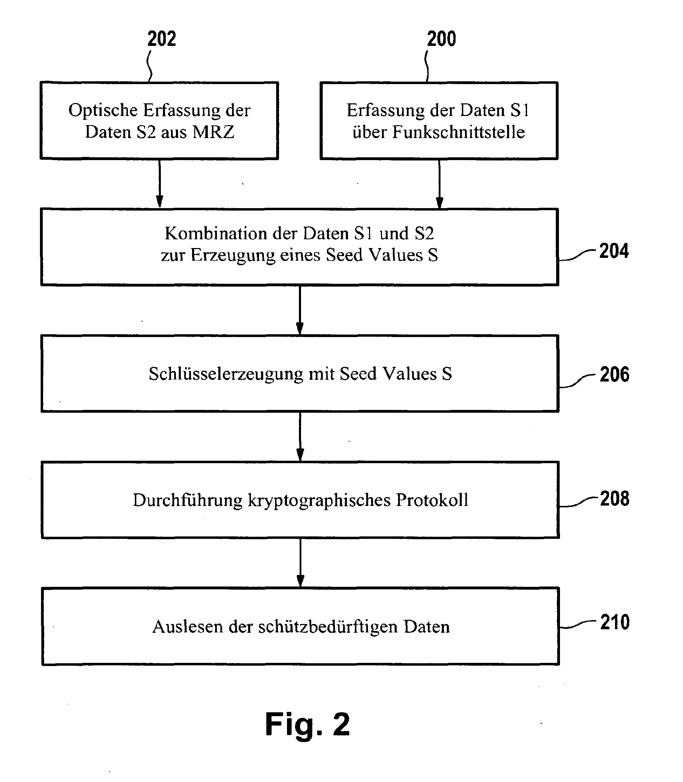

Die Figur 2 zeigt eine mögliche Arbeitsweise des Lesegeräts 118. In dem Schritt 200 werden die Daten S1 aus der Informationsquelle 114 des Dokuments 100 ausgelesen, indem die Informationsquelle 114 durch Ausführung der Programminstruktionen 130 über die Funkschnittstelle 126 von dem Prozessor 122 des Lesegeräts 118 angesprochen wird. Ferner werden mit Hilfe des optischen Sensors 120 die Daten S2 aus der Zone 116 des Dokuments 100 optisch erfasst, indem die Programminstruktionen 124 ausgeführt werden. Die Schritte 200 und 202 können nacheinander oder auch im Wesentlichen gleichzeitig ablaufen.

In dem Schritt 204 werden die Daten S1 und S2 durch Ausführung der Programminstruktionen 134 miteinander kombiniert, um den Seed Value S für die Schlüsselgenerierung zu erzeugen. In dem Schritt 206 wird durch Ausführung der Programminstruktionen 134 der Schlüssel erzeugt, der für die Durchführung des kryptographischen Protokolls in dem Schritt 208 verwendet wird.

Das kryptographische Protokoll wird seitens des Lesegeräts 118 durch Ausführung der Programminstruktionen 132 durchgeführt, indem diese die Ausführung der Programminstruktionen 128 initiieren, sodass der in dem Schritt 206 gewonnene Schlüssel über die Funkschnittstelle 126 zu dem integrierten elektronischen Schaltkreis 104 übertragen wird. Dort wird der Schlüssel durch Ausführung der Programminstruktionen 108 überprüft.

Wenn der Schlüssel zutreffend ist, so greift der integrierte elektronische Schaltkreis 104 auf ein entsprechendes Kommando des Lesegeräts 118 hin auf seinen elektronischen Speicher 110 zu, um die Daten 112 über die Funkschnittstelle 102 an das Lesegerät 118 zu übertragen (Schritt 210). Das Lesegerät 118 kann die empfangenen Daten beispielsweise auf einem Bildschirm ausgeben und/oder speichern und/oder anderweitig weiterverarbeiten.

Das kryptographische Protokoll, welches durch Ausführung der Programminstruktionen 108 und 132 realisiert wird, kann auch komplexerer Natur sein, wie zum Beispiel aufbauend auf der initialen Überprüfung des Schlüssels weitere kryptographische Überprüfungen und Authentifizierungen beinhalten. Ferner ist es auch möglich, dass mit Hilfe der Daten S1 und S2 ein weiterer Schlüssel generiert wird, um einen Secure Messaging-Nachrichtenkanal zwischen dem Lesegerät 118 und dem Dokument 100 aufzubauen, um ein Ausspähen der über Funk übertragenen Daten durch unberechtigte Dritte zu verhindern.

Der Schlüssel für das Secure Messaging kann basierend auf demselben Seed Value S oder einem anderen Seed Value S' erzeugt werden. Beispielsweise gewinnt man den Seed Value S durch Anhängen der Daten S2 an die Daten S1, wohingegen der Seed Value S' durch Anhängen der Daten S1 an die Daten S2 erhalten wird, also S = S1 + S2 und S' = S2 + S1. Der Schlüssel für das Secure Messaging-Verfahren kann dann mit demselben oder einem anderen vorgegebenen Algorithmus generiert werden. Auch hier ist besonders vorteilhaft, dass durch den aufgrund der Informationsquelle 114 verlängerten Seed Value S auch der resultierende Schlüssel für das Secure Messaging länger und damit sicherer ist.

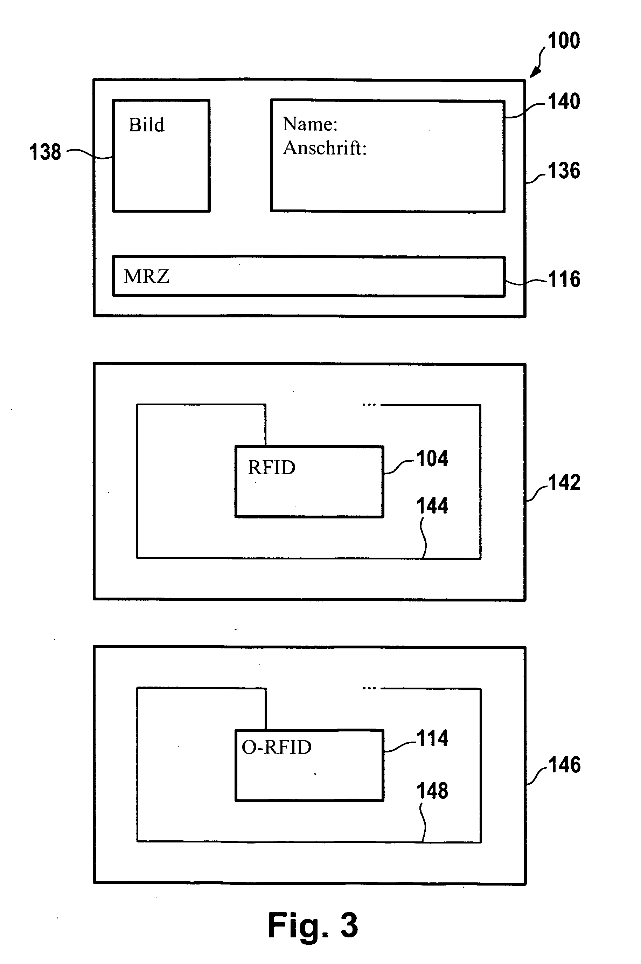

Das Dokument 100 kann beispielsweise einen Schichtaufbau haben, wie es in unterschiedlichen Ausführungsformen in den Figuren 3 bis 5 exemplarisch anhand einiger Schichten dargestellt ist. Die Schichten können jeweils kunststoff- und/oder papier-basiert ausgeführt sein.

In der Ausführungsform der Figur 3 hat das Dokument 100 zumindest eine Schicht 136, die ein Bild 138, wie zum Beispiel ein Passfoto des Trägers es Dokuments 100, ein Datenfeld 140 mit personenbezogenen Daten im Klartext, wie zum Beispiel Name, Anschrift etc., und die optisch lesbare Zone 116 (vgl. Figur 1) beinhaltet. Das Dokument 100 hat eine weitere Schicht 142, die den integrierten elektronischen Schaltkreis 104 trägt, welcher hier als RFID ausgebildet ist. Der integrierte elektronische Schaltkreis 104 hat eine Antenne 144, die zum Beispiel auf die Schicht 142 aufgedruckt oder auflaminiert sein kann, oder die auch als integraler Bestandteil des integrierten elektronischen Schaltkreis 104 ausgebildet sein kann.

Eine weitere Schicht 146 des Dokuments 100 trägt die Informationsquelle 114, die hier als O-RFID ausgebildet ist. Die Informationsquelle 114 hat hier eine eigene Antenne 148, die beispielsweise mit Hilfe einer elektrisch leitenden Druckfarbe auf die Schicht 146 aufgedruckt sein kann.

Die Schichten 136, 142 und 146 sowie unter Umständen weitere, in der Figur 3 der Übersichtlichkeit halber nicht gezeigte Schichten des Dokuments 100, sind Teil eines geschichteten Dokumentenaufbaus, wobei die einzelnen Schichten beispielsweise aufeinander laminiert sind.

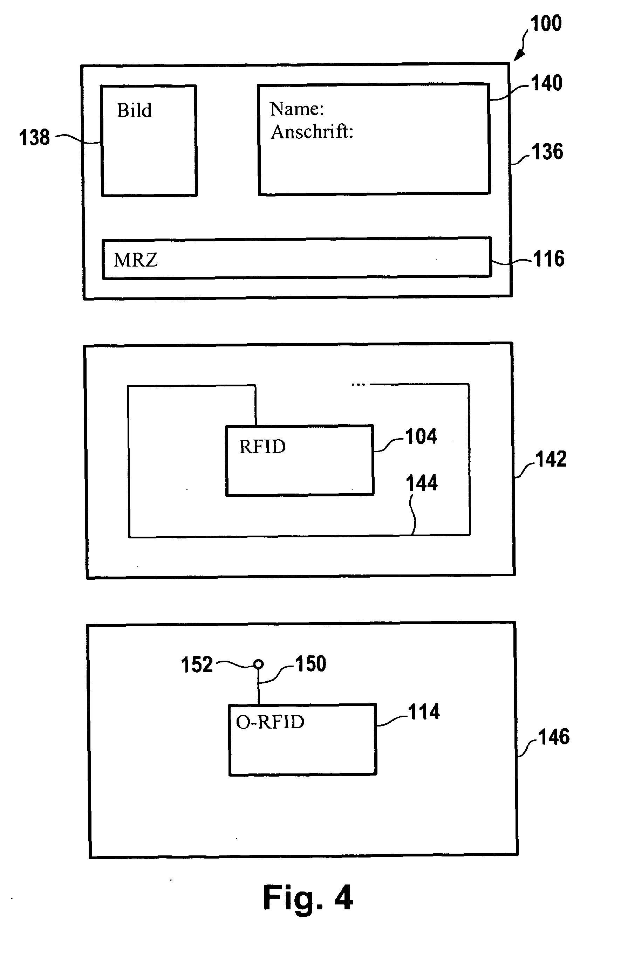

Die Figur 4 zeigt eine weitere Ausführungsform des Dokuments 100, mit nur einer Antenne 144, die sowohl zum Ansprechen des integrierten elektronischen Schaltkreises 104 als auch der Informationsquelle 114 dient. Hierzu ist die Informationsquelle 114 beispielsweise über eine Leiterbahn 150 und ein so genanntes Via 152 mit der Antenne 144 elektrisch verbunden. Beispielsweise können die Leiterbahnen 150 und/oder das Via 152 aus einer elektrisch leitfähigen organischen Druckfarbe bestehen.

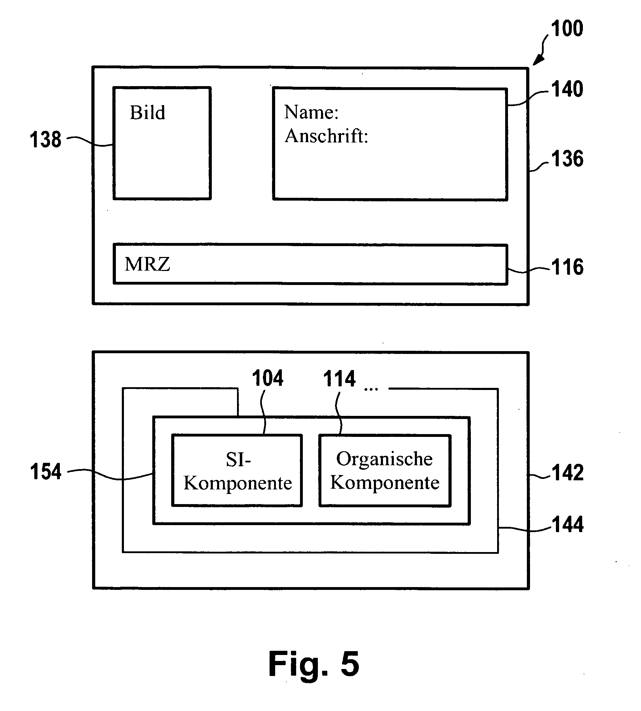

Die Figur 5 zeigt eine weitere Ausführungsform des Dokuments 100 mit einem Hybridchip 154. Der Hybridchip 154 beinhaltet sowohl Komponenten einer üblichen Halbleitertechnologie, wie Silizum-basierte Komponenten, als auch organische Komponenten, insbesondere polymerelektronische Komponenten. Durch die Silizium-Komponenten wird der elektronische Schaltkreis 104 gebildet, wohingegen die Informationsquelle 114 die organischen Komponenten des Hybridchips 154 beinhaltet.

Beispielsweise ist der Hybridchip 154 als so genannter Dual-Interface-Chip ausgebildet, und zwar mit einem Primärchip, der den integrierten elektronischen Schaltkreis 104 beinhaltet und einem Sekundärchip, der die Informationsquelle 114 beinhaltet. Eine Kommunikation mit dem Sekundärchip, d.h. das Auslesen der Daten S1, ist dann nur über den Primärchip möglich. Der Primärchip empfängt also über die einzige Antenne 144 eine an die Informationsquelle 114 gerichtete Leseanforderung von dem Lesegerät 118 und leitet diese an die Informationsquelle 114 weiter. Die Informationsquelle 114 liefert daraufhin die Daten S1 zunächst an den Primärchip, der diese Daten dann über die Antenne 144 abstrahlt.

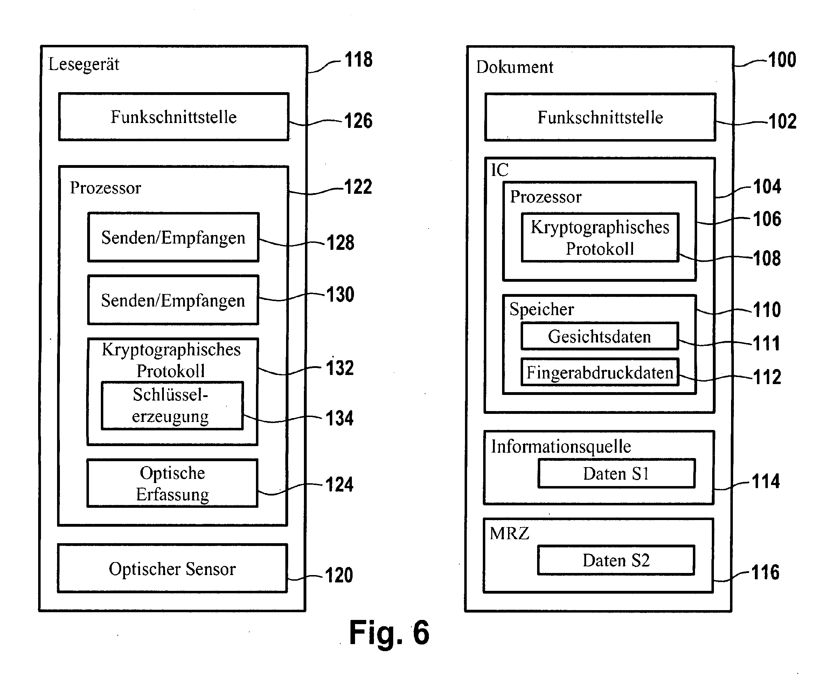

Die Figur 6 zeigt eine weitere Ausführungsform des Lesegeräts 118 und des Dokuments 100. Bei der hier betrachteten Ausführungsform sind neben den besonders schutzbedürftigen Daten 112, wie zum Beispiel Fingerabdruckdaten, auch weniger schutzbedürftige Daten 111 in dem elektronischen Speicher 110 gespeichert, wie zum Beispiel Gesichtsdaten. Der Zugriff auf die weniger sensitiven Daten 111 wird im Rahmen einer Basic Access Control nur mit Hilfe der Daten S2 der Zone 116 gesichert. Ein Zugriff auf die Daten S1 der Informationsquelle 114 ist dazu nicht erforderlich. Dies hat den Vorteil, dass auf die weniger sensitiven Daten 111 auch mit Hilfe eines Lesegeräts zugegriffen werden kann, welches nicht dazu in der Lage ist, die Daten S1 aus der Informationsquelle 114 auszulesen.

Empfängt also das Dokument 100 mit seiner Funkschnittstelle 102 einen zutreffenden Schlüssel, der nur aufgrund der Daten S2 als Seed Value generiert worden ist, so wird lediglich der Zugriff auf die Daten 111 freigegeben, nicht aber auf die Daten 112. Empfängt das Dokument 100 dagegen mit seiner Funkschnittstelle 102 einen anderen zutreffenden kryptographischen Schlüssel, der aufgrund eines aus der Kombination der Daten S1 und S2 gewonnenen Seed Values generiert worden ist, werden sowohl die Daten 111 als auch auf die Daten 112 für den Zugriff des Lesegeräts 118 freigegeben.

In den zuvor beschriebenen Ausführungsformen kann das Dokument 100 eine vorgegebene Gültigkeit haben, wie zum Beispiel eine vorgegebene Gültigkeitsdauer oder eine vorgegebene maximale Anzahl von Lesezugriffen auf die Daten S1 und/oder S2. Wenn die Informationsquelle 114 mit Hilfe zumindest einer organischen Komponente realisiert ist, so wird deren Lebensdauer so gewählt, dass sie in etwa mit Erreichung der maximalen Gültigkeit des Dokuments 100 erschöpft ist. Das Dokument 100 verliert dann mit Ablauf seiner Gültigkeit auch seine Funktionsfähigkeit, sodass sich eine Entwertung des Dokuments 100 erübrigt. Dies ist insbesondere für Anwendungen vorteilhaft, bei denen eine relativ kurze Gültigkeit der Dokumente 100 gewünscht ist, wie zum Beispiel bei Firmenausweisen.

### Bezugszeichenliste

- 100: Dokument
- 102: Funkschnittstelle
- 104: integrierter elektronischer Schaltkreis
- 106: Prozessor
- 108: Programminstruktionen
- 110: elektronischer Speicher
- 111: Daten
- 112: Daten
- 114: Informationsquelle
- 116: Zone
- 118: Lesegerät
- 120: Sensor
- 122: Prozessor
- 124: Programminstruktionen
- 126: Funkschnittstelle
- 128: Programminstruktionen
- 130: Programminstruktionen
- 132: Programminstruktionen
- 134: Programminstruktionen
- 136: Schicht
- 138: Bild
- 140: Datenfeld
- 142: Schicht
- 144: Antenne
- 146: Schicht
- 148: Antenne
- 150: Leiterbahn
- 152: Via
- 154: Hybridchip

## Patentansprüche

1. Dokument mit einem integrierten elektronischen Schaltkreis (104) zur Speicherung von schutzbedürftigen Daten (111, 112) und mit zumindest einer Funkschnittstelle (102; 144, 148) zum Auslesen der schutzbedürftigen Daten, die auf dem integrierten elektronischen Schaltkreis (104) gespeichert sind, wobei der elektronische Schaltkreis (104) zur Ausführung eines kryptographischen Protokolls (108) ausgebildet ist, sodass das Auslesen der Daten nur nach erfolgreicher Durchführung des kryptographischen Protokolls freigegeben wird, und mit einer über Funk auslesbaren Informationsquelle (114) mit ersten Daten (S1) und einer optisch lesbaren Zone (116), insbesondere eine MRZ, mit zweiten Daten (S2), wobei das kryptographische Protokoll so ausgebildet ist, dass die Freigabe des Auslesens der schutzbedürftigen Daten das vorherige Auslesen der ersten und zweiten Daten (S1, S2) voraussetzt, wobei aus den ersten und zweiten Daten (S1, S2) ein kryptographischer Schlüssel gebildet wird, der für die Ausführung des kryptographischen Protokolls benötigt wird, und wobei die Informationsquelle (114) als organische Schaltung, insbesondere als O-RFID, ausgebildet ist, und wobei das Dokument eine vorgegebene Gültigkeit hat und die Informationsquelle (114) in etwa mit Ablauf der Gültigkeit funktionsunfähig wird.

2. Dokument nach Anspruch 1, wobei der integrierte elektronische Schaltkreis (104) ein Siliziumsubstrat aufweist.

3. Dokument nach Anspruch 1 oder 2, wobei es sich bei dem integrierten elektronischen Schaltkreis (104) um einen RFID-Chip handelt.

4. Dokument nach einem der vorhergehenden Ansprüche, wobei es sich bei den schutzbedürftigen Daten um biometrische Daten handelt.

5. Dokument nach einem der vorhergehenden Ansprüche, mit einer Antenne (144), wobei über die Antenne der integrierte elektronische Schaltkreis (104) und die Informationsquelle (114) ansprechbar sind.

6. Dokument nach einem der vorhergehenden Ansprüche, mit einer ersten Antenne (144) für den integrierten elektronischen Schaltkreis(104) und einer zweiten Antenne (148) für die Informationsquelle (114).

7. Dokument nach einem der vorhergehenden Ansprüche mit einem Hybridchip (154), der den integrierten elektronischen Schaltkreis (104) und die Informationsquelle (114) beinhaltet, wobei der Hybridchip (154) eine oder mehrere organische Komponenten beinhaltet.

8. Dokument nach einem der vorhergehenden Ansprüche, mit einem Dual-Interface-Chip (154), wobei der Dual-Interface-Chip einen Primärchip mit dem integrierten elektronischen Schaltkreis (104) und einen Sekundärchip mit der Informationsquelle (114) beinhaltet, und der Primärchip mit dem Sekundärchip so gekoppelt ist, dass die ersten Daten über den Primärchip aus dem Sekundärchip ausgelesen werden können.

9. Dokument nach nach einem der vorhergehenden Ansprüche, wobei die Informationsquelle (114) zumindest ein organisches Bauelement aufweist, dessen Lebensdauer in etwa mit Erreichung der Gültigkeit endet.

10. Dokument nach einem der vorhergehenden Ansprüche, wobei die Informationsquelle (114) ganz oder teilweise aufgedruckt ist.

11. Dokument nach einem der vorhergehenden Ansprüche mit einem mehrschichtigen Aufbau, wobei der integrierte elektronische Schaltkreis (104) oder die Informationsquelle (114) auf oder in derselben Schicht (142) oder verschiedenen Schichten (142, 146) angeordnet sind.

12. Dokument nach einem der vorhergehenden Ansprüche, wobei es sich um ein Wert- oder Sicherheitsdokument, insbesondere ein Ausweis- oder Reisedokument, wie zum Beispiel einen Reisepass, Personalausweis, Führerschein, Visum, Firmenausweis, Berechtigungsnachweis, wie zum Beispiel eine Eintrittskarte, ein Zahlungsmittel, wie zum Beispiel eine Kreditkarte, handelt.

13. Dokument nach einem der vorhergehenden Ansprüche, wobei das Dokument papier- und/oder kunststoffbasiert ist und/oder wobei es sich um eine Chipkarte handelt.

## Claims

1. A document comprising a built-in electronic circuit (104) for storing data (111, 112) in need of protection and comprising at least one radio interface (102; 144, 148) for reading out the data in need of protection, said data being stored on the built-in electronic circuit (104), wherein the electronic circuit (104) is configured to execute a cryptographic protocol (108), such that the readout of the data is released only after successful execution of the cryptographic protocol, and comprising an information source (114) that can be read out via radio and comprises first data (S1), and comprising an optically readable zone (116), in particular an MRZ, comprising second data (S2), wherein the cryptographic protocol is configured such that the release of the readout of the data in need of projection presupposes the prior readout of the first and second data (S1, S2), wherein a cryptographic key is formed from the first and second data (S1, S2) and is required for the execution of the cryptographic protocol, and wherein the information source (114) is configured as an organic circuit, in particular as an O-RFID, and wherein the document has a predefined validity and the information source (114) is inoperative approximately with expiration of the validity.

2. The document according to claim 1, wherein the built-in electronic circuit (104) has a silicon substrate.

3. The document according to claim 1 or 2, wherein the built-in electronic circuit (104) is an RFID chip.

4. The document according to one of the preceding claims, wherein the data in need of projection is biometric data.

5. The document according to one of the preceding claims, comprising an antenna (144), wherein the built-in electronic circuit (104) and the information source (114) can be addressed via the antenna.

6. The document according to one of the preceding claims, comprising a first antenna (144) for the built-in electronic circuit (104) and a second antenna (148) for the information source (114).

7. The document according to one of the preceding claims, comprising a hybrid chip (154) which contains the built-in electronic circuit (104) and the information source (114), wherein the hybrid chip (154) contains one or more organic components.

8. The document according to one of the preceding claims, comprising a dual-interface chip (154), wherein the dual-interface chip contains a primary chip comprising the built-in electronic circuit (104) and a secondary chip comprising the information source (114), and the primary chip is coupled to the secondary chip such that the first data can be read out from the secondary chip via the primary chip.

9. The document according to one of the preceding claims, wherein the information source (114) comprises at least one organic component, of which the service life ends approximately once the validity has been achieved.

10. The document according to one of the preceding claims, wherein the information source (114) is printed wholly or partially.

11. The document according to one of the preceding claims, comprising a multi-layered structure, wherein the built-in electronic circuit (104) or the information source (114) are arranged on or in the same layer (142) or different layers (142, 146).

12. The document according to one of the preceding claims, wherein the document is a document of value or a security document, in particular an identification or travel document, such as a passport, personal identity card, driver's licence, visa, corporate identification card, or a credential, such as an entry card or a payment means, for example a credit card.

13. The document according to one of the preceding claims, wherein the document is paper-based and/or plastic-based, and/or wherein it is a chip card.

## Revendications

1. Document avec un circuit électronique intégré (104) pour le stockage de données à protéger (111, 112) et avec au moins une interface radio (102 ; 144, 148) pour la lecture des données à protéger stockées sur le circuit électronique intégré (104), dans lequel le circuit électronique (104) est conçu pour exécuter un protocole cryptographique (108), de sorte que la lecture des données n'est autorisée qu'après l'exécution réussie du protocole cryptographique, et avec une source d'information cryptographique (114) lisible par radio, avec des premières données (S1) et une zone lisible optiquement (116), en particulier une ZLA, avec des deuxièmes données (S2), dans lequel le protocole cryptographique est conçu de manière à ce que l'autorisation de la lecture des données à protéger suppose la lecture préalable des premières et deuxièmes données (S1, S2), dans lequel une clé cryptographique est formée à partir des premières et deuxièmes données (S1, S2), laquelle est nécessaire pour l'exécution du protocole cryptographique, et dans lequel la source d'information (114) est conçue comme un circuit organique, en particulier comme un O-RFID, et dans lequel le document présente une validité prédéterminée et la source d'information (114) ne fonctionne plus après expiration de la validité.

2. Document selon la revendication 1, dans lequel le circuit électronique intégré (104) comporte un substrat de silicium.

3. Document selon la revendication 1 ou 2, dans lequel le circuit électronique intégré (104) est une puce RFID.

4. Document selon l'une des revendications précédentes, dans lequel les données à protéger sont des données biométriques.

5. Document selon l'une des revendications précédentes, avec une antenne (144), dans lequel le circuit électronique intégré (104) et la source d'information (114) peuvent être contactés par le biais de l'antenne.

6. Document selon l'une des revendications précédentes, avec une première antenne (144) pour le circuit électronique intégré (104) et une deuxième antenne (148) pour la source d'information (114).

7. Document selon l'une des revendications précédentes, avec une puce hybride (154) contenant le circuit électronique intégré (104) et la source d'information (114), dans lequel la puce hybride (154) contient un ou plusieurs composants organiques.

8. Document selon l'une des revendications précédentes, avec une puce à double interface (154), dans lequel la puce à double interface contient une puce primaire avec le circuit électronique intégré (104) et une puce secondaire avec la source d'information (114), et la puce primaire est couplée de telle façon à la puce secondaire que les premières données peuvent être lues sur la puce primaire par le biais de la puce secondaire.

9. Document selon l'une des revendications précédentes, dans lequel la source d'information (114) comporte au moins un élément de construction organique, dont la durée de vie se termine approximativement avec l'atteinte de la validité.

10. Document selon l'une des revendications précédentes, dans lequel la source d'information (114) est entièrement ou partiellement imprimée.

11. Document selon l'une des revendications précédentes, avec une structure multicouches, dans lequel le circuit électronique intégré (104) ou la source d'information (114) sont agencés sur ou dans la même couche (142) ou des couches différentes (142, 146).

12. Document selon l'une des revendications précédentes, dans lequel il s'agit d'un document de valeur ou de sécurité, en particulier d'un document d'identité ou de voyage, tel que par exemple un passeport, une carte d'identité, un permis de conduire, un visa, une carte d'entreprise, une preuve d'admissibilité, telle que par exemple un billet d'entrée, un moyen de paiement, tel que par exemple une carte de crédit.

13. Document selon l'une des revendications précédentes, dans lequel le document est à base de papier et/ou de plastique et/ou dans lequel il s'agit d'une carte à puce.
